# EUROPEAN PATENT APPLICATION

(11) **EP 4 636 537 A1**
(43) Date of publication of application: **22.10.2025**
(21) Application number: 24763150.0
(22) Date of filing: 27.02.2024
(51) Int. Cl.: G06F 1/24

(54) **ELECTRONIC DEVICE AND RELATED RESET RECOVERY METHOD**

(30) Priority: 01.03.2023 CN 202310232591
(71) Applicant: Huawei Technologies Co., Ltd., Shenzhen, Guangdong 518129 (CN)
(72) Inventor: WANG, Zidao, Shenzhen, Guangdong 518129 (CN)
(74) Representative: Maiwald GmbH
(86) International application number: PCT/CN2024/078813
(87) International publication number: WO 2024/179469

(57) **Abstract**

Embodiments of this application disclose an electronic device and a related reset restoring method. The electronic device includes a first processor core, a second processor core, and a power management unit. A first output pin of the first processor core is connected to a first input pin of the second processor core, a first reset pin of the first processor core is connected to a first control pin of the second processor core, and a second reset pin of the second processor core is separately connected to a second control pin of the first processor core and a third control pin of the power management unit. The second processor core is configured to: enter, by the second processor core, a reset state after the second reset pin of the second processor core receives a reset signal; and determine whether the first input pin is in a first state, and if the first input pin is in the first state, send a reset signal to the first reset pin by using the first control pin, for the first processor core to enter a reset state. According to embodiments of this application, a reset operation can be implemented when the electronic device is not completely powered off.

## Description

This application claims priority to Chinese Patent Application No. 202310232591.4, filed with the China National Intellectual Property Administration on March 1, 2023 and entitled "ELECTRONIC DEVICE AND RELATED RESET RESTORING METHOD", which is incorporated herein by reference in its entirety.

### TECHNICAL FIELD

This application relates to the field of terminal devices, and in particular, to an electronic device and a related reset restoring method.

### BACKGROUND

Dual-core processors are usually used in existing electronic devices (for example, a smartwatch). In a dual-core system, one processor core may be an application processor (Application Processor, AP), and may be configured to process service logic like a user interface (user interface, UI). The other processor core is usually a low-power micro control unit (Micro Control Unit, MCU) processor, and can implement functions such as a sensing hub (Sensing hub). A dual-core design is used to ensure smooth UI services, reduce power consumption, and improve a battery life of the electronic device.

Currently, in the dual-core system, if the two cores are abnormal or a core is hung, a function of the entire electronic device is abnormal. Therefore, a solution for restoring stability of the entire device is required, for example, may be implemented by resetting the processor core. When a problem occurs in one processor core in the dual-core processor, a reset operation may be performed on the processor core in which the problem occurs. When the two cores in the electronic device are abnormal, a reset operation may be performed on the two cores, so that the electronic device can restore to a normal working state. In an existing solution, the entire electronic device needs to be powered off (including that a power-off operation needs to be performed on all registers) to implement a dual-core reset operation. However, direct power-off of the electronic device may cause a data loss of a real-time clock register, affecting time accuracy of the electronic device after the electronic device is reset and restarted.

Therefore, how to provide an electronic device and a related reset restoring method to implement a reset operation on a multi-core processor when the electronic device is not completely powered off is an urgent problem to be resolved.

### SUMMARY

A technical problem to be resolved in embodiments of this application is how to provide an electronic device and a related reset restoring method, to implement a reset operation on a multi-core processor when the electronic device is not completely powered off.

According to a first aspect, an embodiment of this application provides an electronic device. The electronic device includes a first processor core, a second processor core, and a power management unit. A first output pin of the first processor core is connected to a first input pin of the second processor core, a first reset pin of the first processor core is connected to a first control pin of the second processor core, and a second reset pin of the second processor core is separately connected to a second control pin of the first processor core and a third control pin of the power management unit. The second processor core is configured to: enter, by the second processor core, a reset state after the second reset pin of the second processor core receives a reset signal; and determine whether the first input pin is in a first state, and if the first input pin is in the first state, send a reset signal to the first reset pin by using the first control pin, for the first processor core to enter a reset state.

Because the second reset pin of the second processor core is connected to both the second control pin of the first processor core and the third control pin of the power management unit, after the second processor core receives the reset signal, it is difficult to determine a specific component that sends the reset signal. However, in this application, if the reset signal is sent by the first processor core, the first processor core further sets the first input pin of the second processor core to a second state (for example, a high-level state) when sending the reset signal. Therefore, after the second processor core receives the reset signal and is reset, the second processor core may determine a status of the first input pin of the second processor core, to determine the specific component that initiates the reset signal received by the second processor core. Specifically, when the first input pin is in the first state (for example, a low-level state) after the second processor core is reset, it indicates that the reset signal is initiated by a user by triggering the power management unit, and multi-core reset needs to be performed. After the second processor core is reset, the second processor core further needs to control the first processor core to enter the reset state. To be specific, the second processor core may send the reset signal to the first reset pin of the first processor core by using the first control pin, for the first processor core to enter the reset state. This implements multi-core reset when the electronic device is not completely powered off. However, in some embodiments, if a multi-core processor is hung, a multi-core reset operation is usually implemented by using a power-off restart function of the multi-core processor, that is, power supply of a dual-core chip is cut off from a back end, to achieve an objective of resetting the entire device. A disadvantage is that a real-time clock register cannot be maintained after the entire device is powered off. As a result, data in the real-time clock register is lost, affecting time accuracy after the device is reset and restarted. However, according to a solution for resetting the entire device (for example, a dual-core reset solution) in embodiments of this application, the entire device is not powered off, but a reset pin of a peer chip is pulled through specific time sequence control to achieve an objective of reset, so that a problem that the real-time clock register cannot maintain time can be resolved.

In some embodiments, the power management unit is configured to: in response to a user operation, send the reset signal to the second reset pin of the second processor core by using the third control pin, where the user operation includes an operation of pressing and holding a power button by a user. The second processor core is further configured to receive, by using the second reset pin, the reset signal sent by the third control pin.

In this embodiment of this application, the power button may be connected to the power management unit, and the third control pin of the power management unit may be connected to the second reset pin of the second processor core. When the electronic device is hung, the user may trigger a reset operation of the processor core by pressing and holding the power button. For example, the user may press and hold the power button to trigger the power management unit to send the reset signal to the second reset pin of the second processor core, so that the second processor core may be triggered to enter the reset state, and the second processor core can restore to an initial configuration state.

In some embodiments, the first processor core is configured to: when detecting response duration of the second processor core exceeds preset duration, control, by using the first output pin, the first input pin to switch from the first state to a second state; and send the reset signal to the second reset pin by using the second control pin. The second processor core is further configured to receive, by using the second reset pin, the reset signal sent by the second control pin.

In this embodiment of this application, after the first processor core sends a request to the second processor core, if the second processor core does not respond for long time, the first processor core may determine that the second processor core is abnormal and a reset operation needs to be performed. Further, the first processor core may control, by using the first output pin, the first input pin to switch from the first state (for example, the low-level state) to the second state (for example, the high-level state), to notify the second processor core that the reset is initiated by the first processor core, and the first processor core may send the reset signal to the second reset pin of the second processor core by using the second control pin, for the second processor core to enter the reset state, and the processor core can restore to a normal working state.

In some embodiments, a second input pin of the first processor core is connected to a second output pin of the second processor core, and the second processor core is further configured to: if the first input pin is in the second state, control, by using the second output pin, the second input pin to switch from a third state to a fourth state. The first processor core is further configured to: determine whether the second input pin is in the fourth state, and if the second input pin is in the fourth state, control, by using the first output pin, the first input pin to switch from the second state to the first state.

In this embodiment of this application, the first output pin is connected to the first input pin of the second processor core, and the second input pin is connected to the second output pin of the second processor core. After the second processor core is reset, if it is determined that the first input pin is in the second state (for example, the high-level state), it indicates that the reset is actively initiated by the first processor core, and the multi-core reset operation does not need to be performed. Further, the second processor core may control, by using the second output pin, the second input pin of the first processor core to switch from the third state (for example, the low-level state) to the fourth state (for example, the high-level state), to reply a current processing status of the second processor core to the first processor core, that is, when the second input pin is in the fourth state, it indicates that the current reset of the second processor core is completed. Next, the first processor core may determine whether the second input pin is in the fourth state, and if the second input pin is in the fourth state, the first processor core controls, by using the first output pin, the first input pin to switch from the second state to the first state, so that the electronic device can complete a current single-core reset operation, and the first processor core can normally access the second processor core.

In some embodiments, the first processor core is further configured to: if the second input pin is in the third state within a preset time period, control, by using the first output pin, the first input pin to switch from the second state to the first state.

In this embodiment of this application, after the first processor core controls the second processor core to enter the reset state, and the second input pin of the first processor core is always in the third state (for example, the low-level state) within a user-defined time period, it indicates that the second processor core does not reply with information after being reset. Further, to prevent the first processor core from being in a wait state for long time, the first processor core may actively control, by using the first output pin, the first input pin to switch from the second state to the first state. In this way, the multi-core processor completes the single-core reset operation, and the first processor core can normally access the second processor core.

In some embodiments, the second processor core is further configured to: after detecting that the first input pin switches from the second state to the first state, control, by using the second output pin, the second input pin to switch from the fourth state to the third state.

In this embodiment of this application, after the second processor core detects that the first input pin switches from the second state to the first state, it indicates that the first processor core can normally access the second processor core. Therefore, the second processor core may control, by using the second output pin, the second input pin to switch from the fourth state to the third state, so that the second processor core can completely restore to the normal working state, that is, the second processor core can also normally access the first processor core, to implement normal dual-core interaction between the first processor core and the second processor core.

According to a second aspect, an embodiment of this application provides a reset restoring method applied to an electronic device. The electronic device includes a first processor core, a second processor core, and a power management unit. A first output pin of the first processor core is connected to a first input pin of the second processor core, a first reset pin of the first processor core is connected to a first control pin of the second processor core, and a second reset pin of the second processor core is separately connected to a second control pin of the first processor core and a third control pin of the power management unit. The method includes: The second processor core enters a reset state after the second reset pin of the second processor core receives a reset signal; and the second processor core determines whether the first input pin is in a first state, and if the first input pin is in the first state, sends a reset signal to the first reset pin by using the first control pin, for the first processor core to enter a reset state.

In some embodiments, the method further includes: In response to a user operation, the power management unit sends the reset signal to the second reset pin of the second processor core by using the third control pin, where the user operation includes an operation of pressing and holding a power button by a user, and the second processor core receives, by using the second reset pin, the reset signal sent by the third control pin.

In some embodiments, the method further includes: When detecting that response duration of the second processor core exceeds preset duration, the first processor core controls, by using the first output pin, the first input pin to switch from the first state to a second state, and sends the reset signal to the second reset pin by using the second control pin; and the second processor core receives, by using the second reset pin, the reset signal sent by the second control pin.

In some embodiments, a second input pin of the first processor core is connected to a second output pin of the second processor core, and the method further includes: If the first input pin is in the second state, the second processor core controls, by using the second output pin, the second input pin to switch from a third state to a fourth state; and the first processor core determines whether the second input pin is in the fourth state, and if the second input pin is in the fourth state, controls, by using the first output pin, the first input pin to switch from the second state to the first state.

In some embodiments, the method further includes: If the second input pin is in the third state within a preset time period, the first processor core controls, by using the first output pin, the first input pin to switch from the second state to the first state.

In some embodiments, the method further includes: After detecting that the first input pin switches from the second state to the first state, the second processor core controls, by using the second output pin, the second input pin to switch from the fourth state to the third state.

According to a third aspect, this application provides a reset restoring method, applied to a second processor core. A first input pin of the second processor core is connected to a first output pin of a first processor core, a first control pin of the second processor core is connected to a first reset pin of the first processor core, and a second reset pin of the second processor core is separately connected to a second control pin of the first processor core and a third control pin of a power management unit. The method includes: The second processor core enters a reset state after the second reset pin of the second processor core receives a reset signal; and the second processor core determines whether the first input pin is in a first state, and if the first input pin is in the first state, sends a reset signal to the first reset pin by using the first control pin, for the first processor core to enter a reset state.

In some embodiments, the method further includes: receiving, by using the second reset pin, the reset signal sent by the third control pin, where the reset signal sent by the third control pin is a reset signal sent by the power management unit in response to a user operation, and the user operation includes an operation of pressing and holding a power button by a user.

In some embodiments, the method further includes: receiving, by using the second reset pin, the reset signal sent by the second control pin, where the reset signal sent by the second control pin is a reset signal sent when the first processor core detects that response duration of the second processor core exceeds preset duration.

In some embodiments, a second input pin of the first processor core is connected to a second output pin of the second processor core, and the method further includes: if the first input pin is in a second state, controlling, by using the second output pin, the second input pin to switch from a third state to a fourth state, for the first processor core to control, after detecting that the second input pin is in the fourth state and by using the first output pin, the first input pin to switch from the second state to the first state, where the second state is a high-level state initiated by the first processor core to the first input pin.

In some embodiments, the method further includes: after detecting that the first input pin switches from the second state to the first state, controlling, by using the second output pin, the second input pin to switch from the fourth state to the third state.

According to a fourth aspect, this application provides a control processing unit. A first input pin of the control processing unit is connected to a first output pin of an application processing unit, a first control pin of the control processing unit is connected to a first reset pin of the application processing unit, and a second reset pin of the control processing unit is separately connected to a second control pin of the application processing unit and a third control pin of a power management unit. The control processing unit is configured to: enter, by the control processing unit, a reset state after the second reset pin of the control processing unit receives a reset signal; and determine whether the first input pin is in a first state, and if the first input pin is in the first state, send a reset signal to the first reset pin by using the first control pin, for the application processing unit to enter a reset state.

### BRIEF DESCRIPTION OF DRAWINGS

FIG. 1 is a diagram of a structure of an electronic device according to an embodiment of the present invention;
FIG. 2 is a diagram of an internal structure of an electronic device according to an embodiment of this application;
FIG. 3A and FIG. 3B are a control time sequence diagram of dual-core reset and single-core reset according to an embodiment of the present invention;
FIG. 4 is a control time sequence diagram of dual-core reset of a smartwatch according to an embodiment of this application;
FIG. 5 is a control time sequence diagram of single-core reset of a smartwatch according to an embodiment of this application; and
FIG. 6 is a flowchart of an electronic device reset restoring method according to an embodiment of the present invention.

### DESCRIPTION OF EMBODIMENTS

The following describes embodiments of this application with reference to accompanying drawings in embodiments of this application.

In the specification, claims, and accompanying drawings of this application, the terms such as "first", "second", "third", and "fourth" are intended to distinguish between different objects but do not indicate a particular sequence. In addition, the terms "including" and "having" and any other variants thereof are intended to cover a non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

An "embodiment" mentioned in this specification means that a particular feature, structure, or characteristic described with reference to this embodiment may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in the specification may be combined with another embodiment.

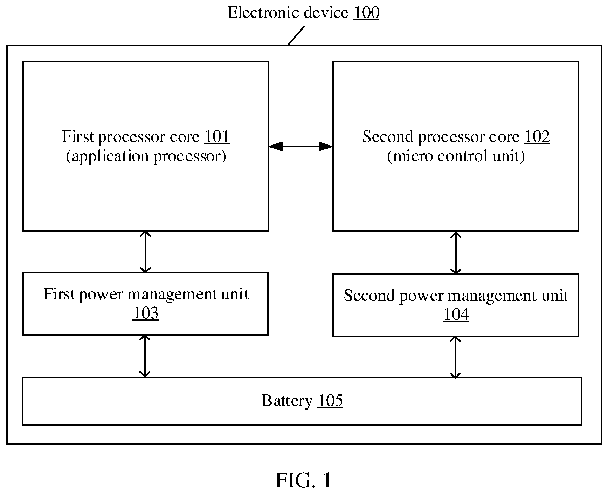

Based on the foregoing technical problem, to facilitate understanding of embodiments of the present invention, the following first describes an electronic device on which embodiments of the present invention are based. The electronic device in this application may be an intelligent wearable device (for example, a smartwatch), a smartphone, a tablet computer, or the like. FIG. 1 is a diagram of a structure of an electronic device according to an embodiment of the present invention. The electronic device 100 may include but is not limited to a first processor core 101, a second processor core 102, a first power management unit 103, a second power management unit 104, a battery 105, and the like.

The first processor core 101 may run an operating system, a file system (for example, a flash file system F2FS), an application program, or the like, to control a plurality of hardware or software elements connected to the first processor core 101, and may process various data and perform operations. The first processor core 101 may load instructions or data stored in an external memory (the electronic device 100 may further include an external memory not shown in FIG. 1) to an internal memory (the electronic device 100 may further include an internal memory not shown in FIG. 1), and invoke to the first processor core 101 for operation, the instructions or data that needs to be operated. After the operation is completed, the first processor core 101 temporarily stores a result in the internal memory, and stores, in the external memory, instructions or data that needs to be stored for long time. The first processor core 101 may include one or more processing units, for example, may include one or more of a central processing unit (CPU), an application processing unit (application processor, AP), a modem processing unit, a graphics processing unit (graphics processing unit, GPU), an image signal processor (image signal processor, ISP), a video codec unit, a digital signal processor (digital signal processor, DSP), a baseband processing unit, a neural-network processing unit (neural-network processing unit, NPU), and the like. Different processing units may be independent components, or may be integrated into one or more components. In some embodiments, the first processor core 101 may be an application processing unit, and may be configured to process service logic such as a user interface (user interface, UI).

The second processor core 102 may be a low-power micro control unit (Micro Control Unit, MCU) processor, and may implement functions such as a sensing hub (Sensing hub). It should be noted that a main function of the sensing hub is to connect and process data from various sensor devices. A dual-core design of the electronic device 100 is used to ensure smooth UI services, reduce power consumption, and improve a battery life of the electronic device 100. Currently, in an electronic device 100 having a multi-core processor, if a plurality of processor cores are abnormal or a processor core is hung, a function of the entire electronic device 100 is abnormal. Therefore, a solution for restoring stability of the entire device is required, for example, may be implemented by resetting the processor core. When a problem occurs in one processor core in the dual-core processor, a reset operation may be separately performed on the processor core in which the problem occurs. When two processor cores are abnormal, a reset operation may be performed on the two processor cores, so that the electronic device 100 can restore to a normal working state.

The first power management unit 103 and the second power management unit 104 may manage power supply of the electronic device 100. The first power management unit 103 may be configured to manage power supply of the first processor core 101 (for example, an application processor), and the second power management unit 104 may be configured to manage power supply of the second processor core 102 (for example, a microprocessor). The first power management unit 103 may be connected to the first processor core 101 and the battery 105. The second power management unit 104 may be connected to the second processor core 102 and the battery 105. The first power management unit 103 and the second power management unit 104 may receive an input from the battery 105, and respectively supply power to the first processor core 101, the second processor core 102, and the like. The first power management unit 103 and the second power management unit 104 may be further configured to monitor parameters such as a battery capacity, a battery cycle count, and a battery health status (electric leakage or impedance). The battery 105 may include a rechargeable battery, a lithium battery, and/or the like.

In some embodiments, if a plurality of processor cores in the electronic device 100 are abnormal, or a processor core is hung, a function of the entire electronic device 100 is abnormal. If an abnormality occurs in a processor core in the dual cores, a reset button of the processor core may be controlled to restore configuration of the processor core to an initial state, to implement a reset operation. If the two cores (for example, the AP and the MCU) are abnormal, the first power management unit 103 and the second power management unit 104 may separately control the first processor core 101 and the second processor core 102 to be completely powered off, to achieve effect of powering off the entire device, thereby implementing an operation of resetting the entire device. However, if the electronic device 100 is directly powered off, data in a plurality of registers such as a real-time clock register is lost, and time accuracy of the electronic device 100 after the electronic device 100 is reset and restarted is affected. As a result, the electronic device 100 cannot quickly restore to a normal use state. To resolve the foregoing technical problem, a reset restoring solution of a multi-core processor is proposed in this application, so that a reset operation on the multi-core processor can be implemented when the electronic device 100 is not completely powered off. Details are not described herein in the following.

It may be understood that the electronic device 100 in FIG. 1 is merely an example implementation provided in this embodiment of the present invention, and the electronic device in embodiments of the present invention includes but is not limited to the foregoing implementation.

The following describes embodiments of this application with reference to the accompanying drawings.

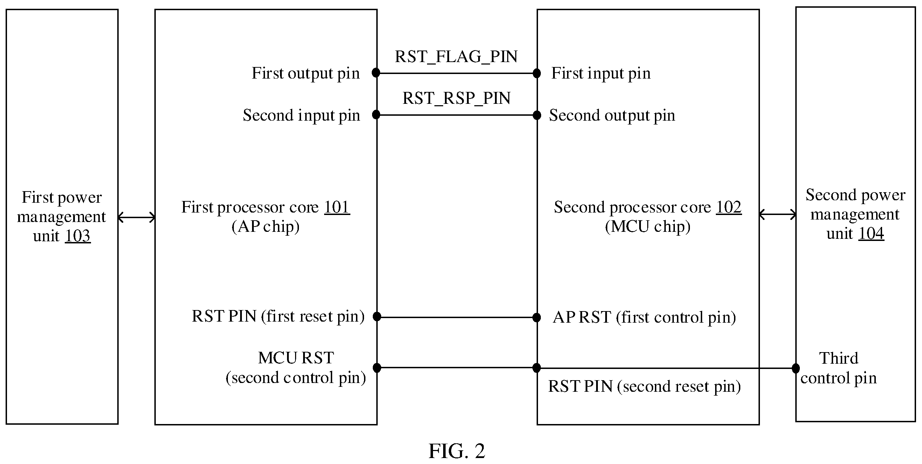

In this embodiment of this application, the first processor core 101 and the second processor core 102 in the electronic device 100 in FIG. 1 may be improved, to implement the reset operation on the multi-core processor when the electronic device 100 is not completely powered off. FIG. 2 is a diagram of an internal structure of an electronic device according to an embodiment of this application. The following describes in detail an electronic device 100 in an embodiment of this application with reference to FIG. 2. The electronic device 100 may include but is not limited to a first processor core 101, a second processor core 102, and a power management unit (the following uses the power management unit as the second power management unit 104 in FIG. 1 for description). A first output pin of the first processor core 101 is connected to a first input pin of the second processor core 102, a first reset pin of the first processor core 101 is connected to a first control pin of the second processor core 102, a second control pin of the first processor core 101 is connected to a second reset pin of the second processor core 102, a third control pin of the second power management unit 104 is connected to a second reset pin of the second processor core 102, and a second input pin of the first processor core 101 is connected to a second output pin of the second processor core 102. The second reset pin of the second processor core 102 is connected to both the second control pin of the first processor core 101 and the third control pin of the second power management unit 104. After the second processor core 102 receives a reset signal, it is difficult to determine a specific component that sends the reset signal. To resolve the technical problem, the electronic device 100 is improved, and a detailed process is as follows.

The second processor core 102 is configured to: enter, by the second processor core 102, to a reset state after the second reset pin of the second processor core 102 receives a reset signal.

Specifically, the first input pin may be an input pin on the second processor core 102, the first control pin may be an input/output (Input/Output, I/O) pin on the second processor core 102, the first reset pin may be a reset pin on the first processor core 101, and the second reset pin may be a reset pin on the second processor core 102. The reset signal may be understood as a pulse signal, for example, a high/low-level signal. The reset state may be understood as that after receiving the reset signal, the processor core clears a current configuration to restore to an initial configuration state.

The second processor core 102 is further configured to: after the second processor core 102 is reset, determine a current pin status of the first input pin, and if the first input pin is in a first state, send a reset signal to the first reset pin by using the first control pin, for the first processor core 101 to enter a reset state.

Specifically, because the second reset pin of the second processor core 102 is connected to both the second control pin of the first processor core 101 and the third control pin of the second power management unit 104, after the second processor core 102 receives the reset signal, it is difficult to determine a specific component that sends the reset signal. Therefore, in this application, if the reset signal is sent by the first processor core 101, the first processor core 101 further outputs a high-level signal to the second processor core 102 when sending the reset signal, so that the first input pin of the second processor core 102 is in a second state (for example, a high-level state). Further, after the second processor core 102 receives the reset signal and is reset, the second processor core 102 may determine a status of the first input pin of the second processor core 102, to determine a specific component that initiates the reset signal received by the second processor core 102.

In this application, if the first input pin of the second processor core 102 is in the first state (for example, a low-level state) after the second processor core 102 is reset, it indicates that the reset signal is initiated by controlling the second power management unit 104 by a user. It may be understood that, when two cores in the electronic device 100 are abnormal, the user may trigger, by pressing and holding a power button, the third control pin of the second power management unit 104 to send the reset signal to the second processor core 102. In this case, after the second processor core 102 is reset, the second processor core 102 further needs to control the first processor core 101 to enter the reset state. To be specific, the second processor core 102 may send the reset signal to the first reset pin of the first processor core 101 by using the first control pin, so that the first processor core 101 also enters the reset state, to implement multi-core reset when the electronic device 100 is not completely powered off.

If the first input pin of the second processor core 102 is in the second state (for example, the high-level state) after the second processor core 102 is reset, it indicates that the reset signal is initiated by the first processor core 101. It may be understood that, if the first processor core 101 can normally access the second processor core 102, it indicates that the first processor core 101 is in a normal working state, and a reset operation is not required. Therefore, after the second processor core 102 is reset, the reset operation may be ended, and the second processor core 102 may restore to the normal working state.

It should be noted that the first state may include the low-level state, but a signal status in the first state may be determined based on a specific system setting. This application is not limited to the low-level state. The second state may be the high-level state, but a signal status in the second state may be determined based on a specific system setting. This application is not limited to the high-level state.

However, in some embodiments, if a multi-core processor is hung, a multi-core reset operation is usually implemented by using a power-off restart function of the multi-core processor, that is, power supply of a dual-core chip is cut off from a back end, to achieve an objective of resetting the entire device. A disadvantage is that a real-time clock register cannot be maintained after the entire device is powered off. As a result, data in the real-time clock register is lost, affecting time accuracy of the electronic device 100 after the device is reset and restarted. However, according to a solution for resetting the entire device (for example, a dual-core reset solution) in embodiments of this application, the entire device is not powered off, but a reset pin of a peer chip is pulled through specific time sequence control to achieve an objective of reset, so that a problem that the real-time clock register cannot maintain time can be resolved.

For example, the first processor core 101 may be an AP chip, and the second processor core 102 may be an MCU chip. After receiving the reset signal and being reset, the MCU chip may determine a pin status of the first input pin (which may also be represented by RST_FLAG_PIN). If the pin is in the low-level state (for example, RST_FLAG_PIN=0), it indicates that the reset signal is initiated by the second power management unit 104. After the MCU chip is reset, the dual-core reset operation further needs to be performed, and the MCU chip sends the reset signal to the first reset pin (which may also be represented by RST_PIN) of the AP chip by using the first control pin (which may also be represented by AP_RST), so that the AP chip enters the reset state, and the dual-core reset operation can be implemented without powering off the AP chip.

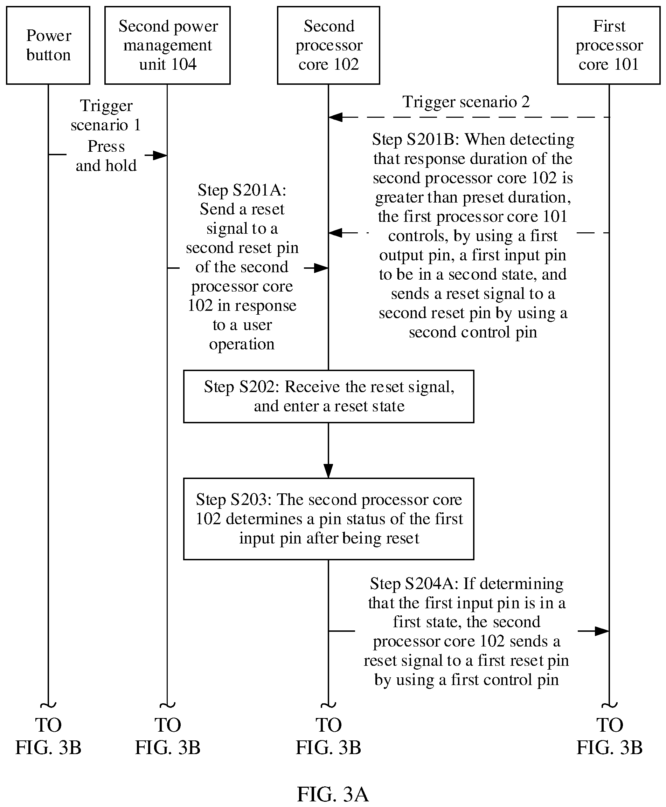

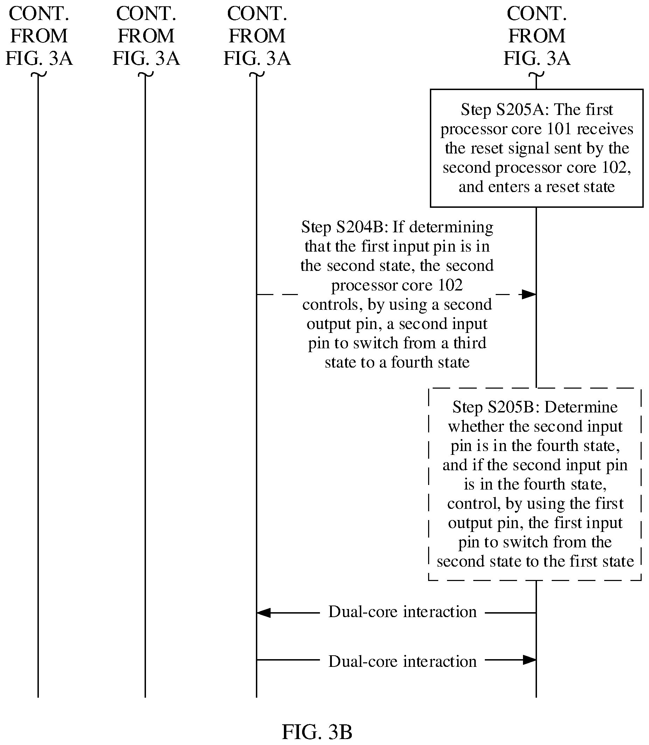

Next, FIG. 3A and FIG. 3B are a control time sequence diagram of dual-core reset and single-core reset according to an embodiment of the present invention, and a reset procedure initiated by a user (namely, a trigger scenario 1) and a reset procedure initiated by a first processor core 101 (namely, a trigger scenario 2) in this application are described in detail with reference to FIG. 3A and FIG. 3B. For the trigger scenario 1, the electronic device 100 may sequentially perform step S201A, step S202, step S203, step S204A, and step S205A. For the trigger scenario 2, the electronic device 100 may sequentially perform step S201B, step S202, step S203, step S204B, and step S205B. Detailed descriptions are described below.

Step S201A: A second power management unit 104 sends a reset signal to a second reset pin of a second processor core 102 in response to a user operation.

Specifically, the user operation may be an operation of pressing and holding a power button. This may be understood as a trigger condition for the trigger scenario 1 (namely, the reset procedure initiated by the user).

Step S201B: When detecting that response duration of the second processor core 102 is greater than preset duration, a first processor core 101 controls, by using a first output pin, a first input pin to be in a second state, and sends the reset signal to the second reset pin by using a second control pin.

Specifically, the preset duration may be user-defined duration. After the electronic device 100 is started, the first processor core 101 may normally interact with the second processor core 102. After the first processor core 101 sends a request to the second processor core 102, if the second processor core 102 does not respond for long time, the first processor core 101 may determine that the second processor core 102 is abnormal and a reset operation needs to be performed. Further, the first processor core 101 may control, by using the first output pin, the first input pin to be in the second state (for example, a high-level state), to notify the second processor core 102 that the current reset is initiated by the first processor core 101, and the first processor core 101 may send the reset signal to the second reset pin of the second processor core 102 by using the second control pin, for the second processor core 102 to enter a reset state. This may be understood as a trigger condition for the trigger the scenario 2 (namely, the reset procedure initiated by the first processor core 101).

Optionally, the first output pin may send the high-level signal to the first input pin, so that the first input pin is in the second state.

Step S202: The second processor core 102 receives the reset signal, and enters a reset state.

Specifically, the power button of the electronic device 100 may be connected to a second power management unit 104, and a third control pin of the second power management unit 104 may be connected to the second reset pin of the second processor core 102. In the trigger scenario 1, when the electronic device 100 is hung, the user may press and hold the power button to trigger the reset operation of the second processor core 102. For example, the user may press and hold the power button, so that the second power management unit 104 sends the reset signal to the second reset pin, to trigger the second processor core 102 to enter the reset state. In this way, the second processor core 102 may restore to an initial configuration state. In the trigger scenario 2, when detecting that the second processor core 102 is abnormal, the first processor core 101 may send the reset signal to the second reset pin by using the second control pin, to trigger the second processor core 102 to enter the reset state after receiving the reset signal sent by the first processor core 101. In this way, the second processor core 102 may restore to the initial configuration state.

Step S203: The second processor core 102 determines a pin status of the first input pin after being reset.

Specifically, because the second reset pin of the second processor core 102 is connected to both the second control pin of the first processor core 101 and the third control pin of the second power management unit 104, after the second processor core 102 receives the reset signal, it is difficult to determine a specific component that sends the reset signal. Therefore, in this application, if the reset signal is sent by the first processor core 101, the first processor core 101 further sets the first input pin of the second processor core 102 to the second state (for example, the high-level state) when sending the reset signal. Further, after the second processor core 102 receives the reset signal and is reset, the second processor core 102 may determine the status of the first input pin of the second processor core 102, to determine the specific component that initiates the reset signal received by the second processor core 102.

It should be noted that, after performing step S203, the second processor core 102 performs step S204A if determining that the first input pin is in a first state, or performs step S204B if determining that the first input pin is in the second state.

Step S204A: If determining that the first input pin is in the first state, the second processor core 102 sends a reset signal to the first reset pin by using the first control pin.

Step S205A: The first processor core 101 receives the reset signal sent by the second processor core 102, and enters the reset state.

It should be noted that, after the first processor core 101 is reset, the first processor core 101 may normally interact with the second processor core 102.

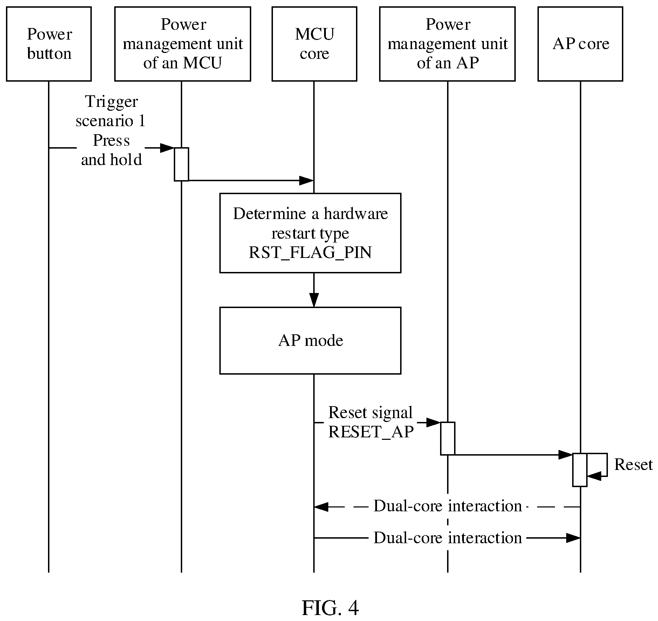

For example, an example in which the electronic device 100 is a smartwatch, the first processor core 101 is an AP core, and the second processor core 102 is an MCU core is used for description. FIG. 4 is a control time sequence diagram of dual-core reset of a smartwatch according to an embodiment of this application. In the figure, a power button may be connected to a power management unit (namely, the second power management unit 104) of the MCU core, and the power management unit of the MCU core may be connected to the MCU core. The MCU core may be further connected to a power management unit of the AP core, and the power management unit of the AP core may be connected to the AP core. If an unrestorable abnormality like suspension of the entire device occurs on the smartwatch, the user presses and holds the power button for several seconds to control the power management unit on the MCU core side to reset the MCU core. After the MCU core is restarted, because the AP core does not set RST_FLAG_PIN to the second state (for example, the high-level state), the MCU core sends the reset signal to a reset pin of the AP core, to reset and restore the AP core. In this way, when the electronic device 100 is not completely powered off, the two cores are reset and restored to implement reset of the entire device. Further, after the two cores are reset, the AP core may perform a normal dual-core interaction procedure with the MCU core.

Step S204B: If determining that the first input pin is in the second state, the second processor core 102 controls, by using the second output pin, the second input pin to switch from a third state to a fourth state.

Specifically, the second input pin may be another I/O pin of the first processor core 101, and the second input pin is connected to the second output pin of the second processor core 102. After the second processor core 102 is reset, if it is determined that the first input pin is in the second state, for example, the high-level state (namely, RST_FLAG_PIN=1), it indicates that the current reset is actively initiated by the first processor core 101. Further, the second processor core 102 may control, by using the second output pin, the second input pin of the first processor core 101 to switch from the third state (for example, a low-level state) to the fourth state (for example, the high-level state), which may be represented by RST_RSP_PIN=1, and is used to return a current processing status of the second processor core 102 to the first processor core 101, that is, the second input pin is in the fourth state, indicating that the current reset of the second processor core 102 is completed.

Optionally, the second output pin may send the high-level signal to the second input pin, so that the second input pin is in the fourth state.

It should be noted that the third state may include the low-level state, but a signal status in the third state may be determined based on a specific system setting. This application is not limited to the low-level state. The fourth state may be the high-level state, but a signal status in the fourth state may be determined based on a specific system setting. This application is not limited to the high-level state.

Step S205B: The first processor core 101 is further configured to: determine whether the second input pin is in the fourth state, and if the second input pin is in the fourth state, control, by using the first output pin, the first input pin to switch from the second state to the first state.

Specifically, the first processor core 101 may determine whether the second input pin is in the fourth state, and if the second input pin is in the fourth state, the first processor core 101 controls, by using the first output pin, the first input pin to switch from the second state (for example, the high-level state) to the first state (for example, the low-level state), so that the electronic device 100 can complete a current single-core reset operation, and the first processor core 101 can normally access the second processor core 102.

Optionally, the first output pin may send the low-level signal to the first input pin, so that the first input pin switches from the second state to the first state.

In some embodiments, the second processor core 102 is further configured to: after detecting that the first input pin switches from the second state to the first state, control, by using the second output pin, the second input pin to switch from the fourth state to the third state.

Specifically, after the second processor core 102 detects that the first input pin switches from the second state (for example, the high-level state) to the first state (for example, the low-level state), it indicates that the first processor core 101 can normally access the second processor core 102. Further, the second processor core 102 may control, by using the second output pin, the second input pin to switch from the fourth state (for example, the high-level state) to the third state (for example, the low-level state), so that the second processor core 102 can completely restore to a normal working state, that is, the second processor core 102 can also normally access the first processor core 101, to implement normal dual-core interaction between the first processor core 101 and the second processor core 102.

Optionally, the second output pin may send the low-level signal to the second input pin, so that the second input pin switches from the fourth state to the third state.

In some embodiments, after the second processor core 102 performs step S202, if the second processor core 102 determines that the first input pin is in the second state, the second processor core 102 may end the reset operation, and may not perform step S204B or step S205B. Further, normal interaction may be performed between the first processor core 101 and the second processor core 102.

In some embodiments, the first processor core 101 is further configured to: if the second input pin is in the third state within a preset time period, control, by using the first output pin, the first input pin to switch from the second state to the first state.

Specifically, the preset time period may be a user-defined time period. After the first processor core 101 controls the second processor core 102 to enter the reset state, and the second input pin of the first processor core 101 is always in the third state (for example, the low-level state) within the user-defined time period, it indicates that the second processor core 102 does not normally reply with information after being reset. Further, to prevent the first processor core 101 from being in a waiting state for long time, the first processor core 101 may actively control, by using the first output pin, the first input pin to switch from the second state (for example, the high-level state) to the first state (for example, the low-level state). In this way, the electronic device 100 can complete the current single-core reset operation, and the first processor core 101 can normally access the second processor core 102.

It should be noted that, after the first processor core 101 sends the reset signal to the second processor core 102, if the second input pin of the first processor core 101 is always in the third state (for example, the low-level state) within the user-defined time period, it may also indicate that the second processor core 102 does not perform the reset operation, or the reset is not completed. To prevent the first processor core 101 from being in the wait state for long time, the first processor core 101 may actively control, by using the first output pin, the first input pin to switch from the second state (for example, the high-level state) to the first state (for example, the low-level state), so that the first processor core 101 can normally access the second processor core 102. If access times out, the first processor core 101 sends the reset signal to the second processor core 102 again, so that the second processor core 102 is reset again.

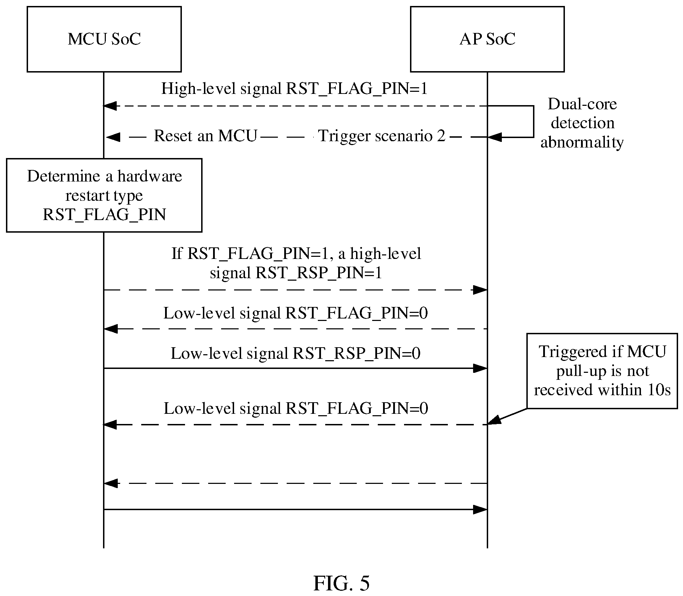

For example, an example in which the electronic device 100 is a smartwatch, the first processor core 101 is an AP core, and the second processor core 102 is an MCU core is used for description. FIG. 5 is a control time sequence diagram of single-core reset of a smartwatch according to an embodiment of this application. In the figure, in a scenario in which the AP core detects that the MCU core is abnormal and cannot be restored, software of the AP core may switch RST_FLAG_PIN from the first state (for example, the low-level state) to the second state (for example, the high-level state), to identify that the AP core actively resets the MCU, and then send the reset signal to a reset pin of the MCU core to reset and restore the MCU core. After the MCU core is restarted and restored, a restart type of the reset is identified by identifying a status of RST_FLAG_PIN. When RST_FLAG_PIN=1, it is identified that the current reset operation is a single-core reset operation initiated by the AP core. Further, after the MCU core is reset, the MCU core may switch the RST_RSP_PIN pin from the third state (for example, the low-level state) to the fourth state (for example, the high-level state), to notify the AP core that the MCU core has been reset and the AP core can normally access the MCU core. Then, the AP core may control the RST_FLAG_PIN to switch from the second state (for example, the high-level state) to the first state (for example, the low-level state). When detecting that RST_FLAG_PIN=0, the MCU core may switch the RST_RSP_PIN pin from the fourth state (for example, the high-level state) to the third state (for example, the low-level state), so that the AP core and the MCU core can perform normal dual-core interaction.

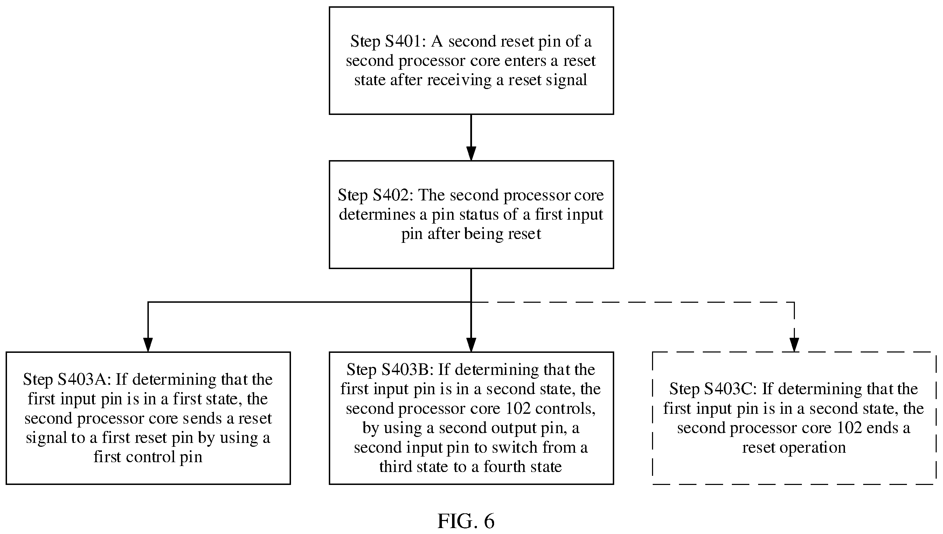

FIG. 6 is a flowchart of an electronic device reset restoring method according to an embodiment of the present invention. The method is applied to a second processor core of an electronic device. The electronic device may be the foregoing electronic device 100, and may include a first processor core, the second processor core, and a power management unit. A first output pin of the first processor core is connected to a first input pin of the second processor core, a first reset pin of the first processor core is connected to a first control pin of the second processor core, and a second reset pin of the second processor core is separately connected to a second control pin of the first processor core and a third control pin of the power management unit. The method includes:
Step S401: The second reset pin of the second processor core enters a reset state after receiving a reset signal.
   For details, refer to the foregoing detailed descriptions of step S202 in FIG. 3A.
Step S402: The second processor core determines a pin status of the first input pin after being reset.
   For details, refer to the foregoing detailed descriptions of step S203 in FIG. 3A.
Step S403A: If determining that the first input pin is in a first state, the second processor core sends a reset signal to the first reset pin by using the first control pin.
   For details, refer to the foregoing detailed descriptions of step S204A in FIG. 3A.
Step S403B: If determining that the first input pin is in a second state, the second processor core 102 controls, by using the second output pin, the second input pin to switch from a third state to a fourth state.
   For details, refer to the foregoing detailed descriptions of step S204B in FIG. 3B.
Step S403C: If determining that the first input pin is in a second state, the second processor core 102 ends a reset operation.

In some embodiments, after the second processor core performs step S402, if the second processor core determines that the first input pin is in the second state, the second processor core may further end the reset operation. Further, normal interaction may be performed between the first processor core and the second processor core.

In conclusion, in this application, after receiving the reset signal and performing the reset operation, the second processor core may determine the status of the first input pin of the second processor core. After the second processor core is reset, the first input pin may have two statuses: a high-level state and a low-level state. When the first input pin is in the low-level state after the second processor core is reset, it indicates that a multi-core processor needs to perform multi-core reset. After the second processor core is reset, the second processor core further needs to control the first processor core to enter a reset state. To be specific, the second processor core may send the reset signal to the first reset pin of the first processor core by using the first control pin, for the first processor core to enter the reset state. In this way, multi-core reset is implemented when the multi-core processor is not completely powered off.

This application provides a control processing unit. A first input pin of the control processing unit is connected to a first output pin of an application processing unit, a first control pin of the control processing unit is connected to a first reset pin of the application processing unit, and a second reset pin of the control processing unit is separately connected to a second control pin of the application processing unit and a third control pin of a power management unit. The control processing unit is configured to: enter, by the control processing unit, a reset state after the second reset pin of the control processing unit receives a reset signal; and determine whether the first input pin is in a first state, and if the first input pin is in the first state, send a reset signal to the first reset pin by using the first control pin, for the application processing unit to enter a reset state.

In this embodiment of this application, the control processing unit may be the second processor core 102 in FIG. 1, and the control processing unit may perform some or all of the steps performed by the second processor core 102 in FIG. 2. The application processing unit may be the first processor core 101 in FIG. 1, and the application processing unit may perform some or all of the steps performed by the first processor core 101 in FIG. 2.

In the foregoing embodiments, the descriptions of embodiments have respective focuses. For a part that is not described in detail in an embodiment, reference may be made to related descriptions in other embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

In several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located at one location, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of software product. The computer software product is stored in a storage medium and includes several instructions for instructing a computer device (which may be a personal computer, a server, a network device, or the like, and may be specifically a processor in a computer device) to perform all or some of the steps of the methods described in embodiments of this application. The foregoing storage medium may include any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the spirit and scope of the technical solutions of embodiments of this application.

## Claims

1. An electronic device, wherein the electronic device comprises a first processor core, a second processor core, and a power management unit, a first output pin of the first processor core is connected to a first input pin of the second processor core, a first reset pin of the first processor core is connected to a first control pin of the second processor core, a second reset pin of the second processor core is separately connected to a second control pin of the first processor core and a third control pin of the power management unit, and the second processor core is configured to:
enter, by the second processor core, a reset state after the second reset pin of the second processor core receives a reset signal; and
determine whether the first input pin is in a first state, and if the first input pin is in the first state, send a reset signal to the first reset pin by using the first control pin, for the first processor core to enter a reset state.

2. The device according to claim 1, wherein the power management unit is configured to: in response to a user operation, send the reset signal to the second reset pin of the second processor core by using the third control pin, wherein the user operation comprises an operation of pressing and holding a power button by a user; and
the second processor core is further configured to receive, by using the second reset pin, the reset signal sent by the third control pin.

3. The device according to claim 1, wherein the first processor core is configured to:
when detecting that response duration of the second processor core exceeds preset duration, control, by using the first output pin, the first input pin to switch from the first state to a second state; and send the reset signal to the second reset pin by using the second control pin; and
the second processor core is further configured to receive, by using the second reset pin, the reset signal sent by the second control pin.

4. The device according to any one of claims 1 to 3, wherein a second input pin of the first processor core is connected to a second output pin of the second processor core, and the second processor core is further configured to:
if the first input pin is in the second state, control, by using the second output pin, the second input pin to switch from a third state to a fourth state; and
the first processor core is further configured to: determine whether the second input pin is in the fourth state, and if the second input pin is in the fourth state, control, by using the first output pin, the first input pin to switch from the second state to the first state.

5. The device according to claim 4, wherein the first processor core is further configured to:
if the second input pin is in the third state within a preset time period, control, by using the first output pin, the first input pin to switch from the second state to the first state.

6. The device according to claim 4, wherein the second processor core is further configured to:
after detecting that the first input pin switches from the second state to the first state, control, by using the second output pin, the second input pin to switch from the fourth state to the third state.

7. A reset restoring method, applied to an electronic device, wherein the electronic device comprises a first processor core, a second processor core, and a power management unit, a first output pin of the first processor core is connected to a first input pin of the second processor core, a first reset pin of the first processor core is connected to a first control pin of the second processor core, a second reset pin of the second processor core is separately connected to a second control pin of the first processor core and a third control pin of the power management unit, and the method comprises:
entering, by the second processor core, a reset state after the second reset pin of the second processor core receives a reset signal; and
determining, by the second processor core, whether the first input pin is in a first state, and if the first input pin is in the first state, sending a reset signal to the first reset pin by using the first control pin, for the first processor core to enter a reset state.

8. The method according to claim 7, wherein the method further comprises:
in response to a user operation, sending, by the power management unit, the reset signal to the second reset pin of the second processor core by using the third control pin, wherein the user operation comprises an operation of pressing and holding a power button by a user; and
receiving, by the second processor core by using the second reset pin, the reset signal sent by the third control pin.

9. The method according to claim 7, wherein the method further comprises:
when detecting that response duration of the second processor core exceeds preset duration, controlling, by the first processor core by using the first output pin, the first input pin to switch from the first state to a second state; and sending the reset signal to the second reset pin by using the second control pin; and
receiving, by the second processor core by using the second reset pin, the reset signal sent by the second control pin.

10. The method according to any one of claims 7 to 9, wherein a second input pin of the first processor core is connected to a second output pin of the second processor core, and the method further comprises:
if the first input pin is in the second state, controlling, by the second processor core by using the second output pin, the second input pin to switch from a third state to a fourth state; and
determining, by the first processor core, whether the second input pin is in the fourth state, and if the second input pin is in the fourth state, controlling, by using the first output pin, the first input pin to switch from the second state to the first state.

11. The method according to claim 10, wherein the method further comprises:
if the second input pin is in the third state within a preset time period, controlling, by the first processor core by using the first output pin, the first input pin to switch from the second state to the first state.

12. The method according to claim 10, wherein the method further comprises:
after detecting that the first input pin switches from the second state to the first state, controlling, by the second processor core by using the second output pin, the second input pin to switch from the fourth state to the third state.

13. A reset restoring method, applied to a second processor core, wherein a first input pin of the second processor core is connected to a first output pin of a first processor core, a first control pin of the second processor core is connected to a first reset pin of the first processor core, a second reset pin of the second processor core is separately connected to a second control pin of the first processor core and a third control pin of a power management unit, and the method comprises:
entering, by the second processor core, a reset state after the second reset pin of the second processor core receives a reset signal; and
determining, by the second processor core, whether the first input pin is in a first state, and if the first input pin is in the first state, sending a reset signal to the first reset pin by using the first control pin, for the first processor core to enter a reset state.

14. The method according to claim 13, wherein the method further comprises:
receiving, by using the second reset pin, the reset signal sent by the third control pin, wherein the reset signal sent by the third control pin is a reset signal sent by the power management unit in response to a user operation, and the user operation comprises an operation of pressing and holding a power button by a user.

15. The method according to claim 13, wherein the method further comprises:
receiving, by using the second reset pin, the reset signal sent by the second control pin, wherein the reset signal sent by the second control pin is a reset signal sent when the first processor core detects that response duration of the second processor core exceeds preset duration.

16. The method according to any one of claims 13 to 15, wherein a second input pin of the first processor core is connected to a second output pin of the second processor core, and the method further comprises:
if the first input pin is in a second state, controlling, by using the second output pin, the second input pin to switch from a third state to a fourth state, for the first processor core to control, after detecting that the second input pin is in the fourth state and by using the first output pin, the first input pin to switch from the second state to the first state, wherein the second state is a high-level state initiated by the first processor core to the first input pin.

17. The method according to claim 16, wherein the method further comprises:
after detecting that the first input pin switches from the second state to the first state, controlling, by using the second output pin, the second input pin to switch from the fourth state to the third state.

18. A control processing unit, wherein a first input pin of the control processing unit is connected to a first output pin of an application processing unit, a first control pin of the control processing unit is connected to a first reset pin of the application processing unit, a second reset pin of the control processing unit is separately connected to a second control pin of the application processing unit and a third control pin of a power management unit, and the control processing unit is configured to:
enter, by the control processing unit, a reset state after the second reset pin of the control processing unit receives a reset signal; and
determine whether the first input pin is in a first state, and if the first input pin is in the first state, send a reset signal to the first reset pin by using the first control pin, for the application processing unit to enter a reset state.
